# EUROPEAN PATENT APPLICATION

(11) **EP 4 579 796 A1**
(43) Date of publication of application: **02.07.2025**
(21) Application number: 24857449.3
(22) Date of filing: 12.08.2024
(51) Int. Cl.: H01M 4/1397, H01M 4/58, H01M 4/62, H01M 4/13, H01M 10/0525, C01B 25/45

(54) **LITHIUM IRON PHOSPHATE AND PREPARATION METHOD THEREFOR AND USE THEREOF, AND AMMONIUM SALT COMPOUND AND USE THEREOF**

(30) Priority: 15.11.2023 CN 202311523468
(71) Applicant: Contemporary Amperex Technology (Hong Kong) Limited, Central (HK)
(72) Inventor: WU, Kai, Ningde, Fujian 352100 (CN); LIN, Zilong, Ningde, Fujian 352100 (CN); YAO, Haibin, Ningde, Fujian 352100 (CN); ZHAO, Hongwei, Ningde, Fujian 352100 (CN); BIE, Changfeng, Ningde, Fujian 352100 (CN); DU, Wanying, Ningde, Fujian 352100 (CN); MENG, Xiangxi, Ningde, Fujian 352100 (CN); ZHONG, Rouchao, Ningde, Fujian 352100 (CN); QIU, Junqiang, Ningde, Fujian 352100 (CN)
(74) Representative: Jacob, Reuben Ellis
(86) International application number: PCT/CN2024/111522
(87) International publication number: WO 2025/102857

(57) **Abstract**

This application relates to a lithium iron phosphate and a preparation method and application thereof, and an ammonium salt compound and application thereof. The method for preparing lithium iron phosphate includes: mixing iron phosphate, a lithium source, a carbon source, a dispersant, and a solvent to make a precursor slurry; sintering the precursor slurry to make lithium iron phosphate, where the dispersant includes an ammonium salt compound represented by Formula (1), in which R₁ is a carbon-containing organic group. The lithium iron phosphate prepared by the method for preparing lithium iron phosphate can improve charge and discharge capacities of the secondary battery.

## Description

### CROSS-REFERENCE TO RELATED APPLICATIONS

This application claims priority to Chinese Patent Application No. 2023115234684, filed on November 15, 2023 and entitled "LITHIUM IRON PHOSPHATE AND PREPARATION METHOD AND APPLICATION THEREOF, AND AMMONIUM SALT COMPOUND AND APPLICATION THEREOF", which is incorporated herein by reference in its entirety.

### TECHNICAL FIELD

This application relates to the field of battery technology, and in particular, to a lithium iron phosphate and a preparation method and application thereof, and an ammonium salt compound and application thereof.

### BACKGROUND

Secondary batteries are increasingly widely used by virtue of cleanness and renewability, and generate electrical energy mainly by the movement of active ions such as lithium ions between a positive electrode and a negative electrode.

Lithium iron phosphate as a positive electrode material has become one of vastly applied positive electrode materials by virtue of a stable structure, an excellent charge-discharge platform, a relatively high capacity, and good cycle performance. Conventional lithium iron phosphate is mainly prepared by synthesizing phosphorus and iron, and the preparation process mainly includes: mixing iron phosphate, a lithium source, and a carbon source in a solvent to obtain a slurry, and then sintering the slurry. During the mixing in the conventional preparation process, the solid content of the slurry needs to be kept at a relatively low level because a high solid content leads to an increase in the viscosity of the slurry and is unfavorable to generating lithium iron phosphate through reaction. Consequently, the microstructure of the resulting lithium iron phosphate is incomplete. The low solid content of the slurry drastically limits the throughput of the lithium iron phosphate. The conventional preparation process is accompanied by many side reactions. Such factors all reduce the stability of the lithium iron phosphate. When used in the preparation of batteries, the lithium iron phosphate produces an adverse effect on the performance of the battery, such as the charge and discharge capacities of the battery.

With higher requirements being imposed on secondary batteries, it is more difficult for the conventional lithium iron phosphate positive electrode materials to meet people's requirements, and the materials need to be further improved.

### SUMMARY

In view of the above situation, it is necessary to provide a lithium iron phosphate and a preparation method and application thereof, and an ammonium salt compound and application thereof to improve the charge and discharge capacities of secondary batteries.

According to a first aspect, a method for preparing lithium iron phosphate is provided, including the following steps:
mixing iron phosphate, a lithium source, a carbon source, a dispersant, and a solvent to make a precursor slurry; and
sintering the precursor slurry to make lithium iron phosphate.

The dispersant includes an ammonium salt compound represented by Formula (1):

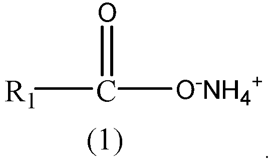

In the formula above, R₁ is a carbon-containing organic group.

In the method for preparing lithium iron phosphate, the iron phosphate, the lithium source, the carbon source, the dispersant, and the solvent are mixed first. The dispersant includes an ammonium salt compound of a specified structure. The ammonium salt compound forms a negatively charged ion group after being ionized. The negatively charged end of the group is adsorbed onto the surface of the iron phosphate constituent in the precursor slurry. The carbon-containing organic group at the other end of the group stretches to form a steric hindrance. The probability of agglomeration between solid particles in the precursor slurry is reduced by the steric hindrance, thereby facilitating reaction of the constituents during the subsequent sintering, and improving the microstructural integrity of the resulting lithium iron phosphate. In this way, the morphology of the resulting lithium iron phosphate particles is superior, the surface of the particles is rounder and smoother, and the structure of the particles is more stable. In addition, the ammonium salt compound decomposes into an easily vaporizable product during the sintering, thereby reducing the by-products in the lithium iron phosphate, and improving the charge and discharge capacities of the secondary battery.

In the method for preparing lithium iron phosphate, the ammonium salt compound of a specified structure exerts a strong effect of dispersing. Even if the solid content of the precursor slurry is relatively high, the morphology of the resulting lithium iron phosphate particles is superior, and the microstructure of the particles is complete.

In some embodiments, the ammonium salt compound includes at least one of compounds represented by Formula (1A) to Formula (1B):

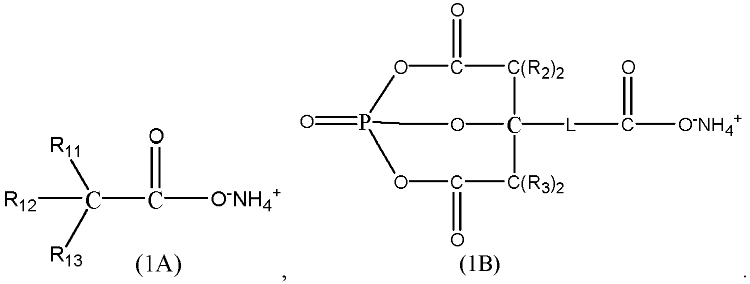

In the formulas above, R₁₁ to R₁₃ each are independently selected from hydrogen, a substituted or unsubstituted C₁ to C₅ alkyl group, a hydroxyl group, or - C(O)O⁻NH₄⁺.

Each R₂ and each R₃ are any one independently selected from hydrogen or a substituted or unsubstituted C₁ to C₅ alkyl group.

L is any one selected from a single bond, a C₁ to C₅ alkylene, or a C₁ to C₅ alkylene in which a hydrogen atom is substituted by -C(O)O⁻NH₄⁺.

The compounds of Formula (1A) and Formula (1B) used as a dispersant can improve the microstructural stability of the resulting lithium iron phosphate. Especially, the compound of Formula (1B) further contains a specified phosphate ester structure of relatively high activity, and can exert an effect of dispersing while stimulating the reaction between the iron phosphate, lithium source, and carbon source and inducing the formation of lithium iron phosphate, thereby further improving the microstructural stability of the resulting lithium iron phosphate.

Furthermore, the compound of Formula (1B) stimulating the reaction between the iron phosphate, lithium source, and carbon source can reduce the temperature of the subsequent sintering. The lithium iron phosphate of a complete microstructure can be obtained at just a relatively low temperature. The relatively low sintering temperature can also reduce the side reactions during the sintering, reduce the content of the by-product impurities such as elemental iron and iron phosphide in the resulting lithium iron phosphate, and further improve the charge-discharge capacity of the secondary battery.

In some embodiments, the compound represented by Formula (1A) satisfies at least one of the following conditions (1) to (2):
(1) R₁₁ to R₁₃ each are independently selected from hydrogen, an unsubstituted C₁ to C₅ alkyl group, a hydroxy-substituted C₁ to C₅ alkyl group, a hydroxyl group, or -C(O)O⁻NH₄⁺; or
(2) at least one of R₁₁ to R₁₃ is -C(O)O⁻NH₄⁺.

A larger amount of the -C(O)O⁻NH₄⁺ group in the compound represented by Molecular Formula (1A) produces higher dispersibility.

In some embodiments, the ammonium salt compound includes at least one of ammonium citrate, diammonium citrate, or a compound represented by Formula (b-1) or Formula (b-2):

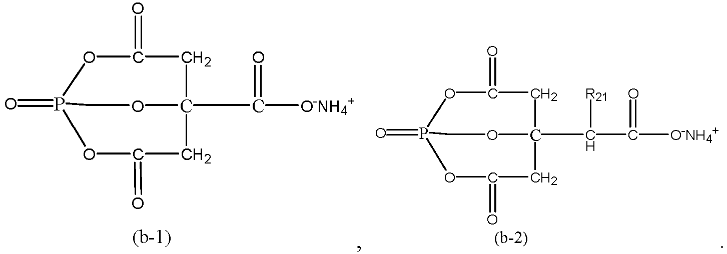

In the formulas above, R₂₁ is selected from a C₁ to C₃ alkyl group or -C(O)O⁻NH₄⁺.

In some embodiments, a mass of the dispersant is 0.3% to 7% of a mass of the iron phosphate.

Optionally, the mass of the dispersant is 0.5% to 1% of the mass of the iron phosphate.

By regulating the mass percent of the dispersant, this application further improves the microstructural stability of the resulting lithium iron phosphate.

It is found through research that within a specified range, a higher mass percent W₁% of the dispersant in relation to the mass of the iron phosphate makes the microstructure of the resulting lithium iron phosphate more complete, and leads to higher charge and discharge capacities of the secondary battery. When W₁% is close to 1%, the growth rate of the charge and discharge capacities of the secondary battery almost reaches a balance. If W₁% still continues to increase, the growth rate of the charge and discharge capacities of the secondary battery becomes relatively small, and the charge and discharge capacities have increased to such a level that gives rise to a high degree of lithium plating, thereby producing an adverse effect on the lifespan of the secondary battery. In this way, the range of W₁% can be further controlled to further increase the charge and discharge capacities of the secondary battery while reducing the probability of lithium plating.

In some embodiments, the sintering is performed at a temperature of 780 °C to 820 °C.

Optionally, the sintering is performed at a temperature of 750 °C to 790 °C.

In some embodiments, the preparation method satisfies at least one of the following conditions (1) to (2):
(1) The carbon source includes at least one of glucose, sucrose, starch, phenolic resin, cyclodextrin, polyethylene, polyethylene glycol, or polyvinyl alcohol; or
(2) The lithium source includes at least one of lithium hydroxide monohydrate, lithium carbonate, lithium dihydrogen phosphate, lithium phosphate, or lithium acetate.

In some embodiments, the precursor slurry satisfies at least one of the following conditions (1) to (3):
(1) a solid content of the precursor slurry is greater than or equal to 45%; or
(2) the solvent includes at least one of water or an alcohol organic solvent.

According to a second aspect, this application provides a lithium iron phosphate. The lithium iron phosphate is prepared by the method for preparing lithium iron phosphate according to the first aspect.

In the method for preparing lithium iron phosphate, the dispersant includes an ammonium salt compound of a specified structure. The ammonium salt compound forms a negatively charged ion group after being ionized. The negatively charged end of the group is adsorbed onto the surface of the iron phosphate constituent in the precursor slurry. The carbon-containing organic group at the other end of the group stretches to form a steric hindrance. The probability of agglomeration between solid particles in the precursor slurry is reduced by the steric hindrance, thereby facilitating reaction of the constituents during the subsequent sintering, and improving the microstructural integrity of the resulting lithium iron phosphate. In this way, the morphology of the resulting lithium iron phosphate particles is superior, and the structure of the particles is more stable. In addition, the ammonium salt compound decomposes into an easily vaporizable product during the sintering, thereby reducing the by-products in the lithium iron phosphate, and improving the charge and discharge capacities of the secondary battery.

According to a third aspect, an ammonium salt compound is provided. The ammonium salt compound is represented by Formula (1B):

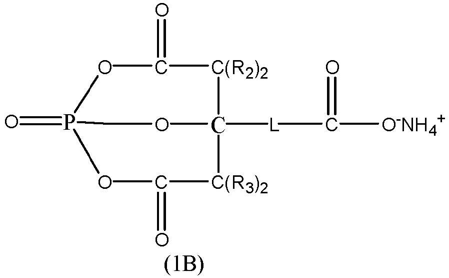

In the formula above, each R₂ and each R₃ are any one independently selected from hydrogen or a substituted or unsubstituted C₁ to C₅ alkyl group; and
L is any one selected from a single bond, a C₁ to C₅ alkylene, or a C₁ to C₅ alkylene in which a hydrogen atom is substituted by -C(O)O⁻NH₄⁺.

According to a fifth aspect, this application provides application of the ammonium salt compound according to third aspect, where the ammonium salt compound serves as a dispersant.

According to a fifth aspect, this application provides application of the ammonium salt compound according to the third aspect in preparation of lithium iron phosphate.

The compound of Formula (1B) further contains a specified phosphate ester structure of relatively high activity, and, when applied to preparing lithium iron phosphate, can exert an effect of dispersing while stimulating the reaction between the iron phosphate, lithium source, and carbon source and inducing the formation of lithium iron phosphate, thereby further improving the microstructural stability of the resulting lithium iron phosphate.

Furthermore, the compound of Formula (1B) stimulating the reaction between the iron phosphate, lithium source, and carbon source can reduce the temperature of the subsequent sintering. The lithium iron phosphate of a complete microstructure can be obtained at just a relatively low temperature. The relatively low sintering temperature can also reduce the side reactions during the sintering, reduce the by-product impurities such as elemental iron and iron phosphide in the resulting lithium iron phosphate, and further improve the charge-discharge capacity of the secondary battery.

According to a sixth aspect, this application provides a positive electrode plate. The positive electrode plate includes a current collector and a positive active layer disposed on a surface of the current collector. Constituents of the positive active layer include the lithium iron phosphate according to the second aspect.

According to a seventh aspect, this application provides a secondary battery. The secondary battery includes the lithium iron phosphate according to the second aspect or the positive electrode plate according to the sixth aspect.

According to an eighth aspect, this application provides an electrical device. The electrical device includes the secondary battery according to the seventh aspect.

### BRIEF DESCRIPTION OF DRAWINGS

By reading the following detailed description of exemplary embodiments, a person of ordinary skill in the art becomes clearly aware of various other advantages and benefits. The drawings are merely intended to illustrate the exemplary embodiments, but not to limit this application. In all the drawings, the same reference numeral represents the same component. In the drawings:
FIG. 1 is a schematic diagram of a mechanism of action of a dispersant during preparation of lithium iron phosphate according to an embodiment;
FIG. 2 is a schematic diagram of a battery cell according to an embodiment;
FIG. 3 is an exploded view of FIG. 2;
FIG. 4 is a schematic diagram of a battery pack according to an embodiment;
FIG. 5 is an exploded view of FIG. 4;
FIG. 6 is a schematic diagram of an electrical device using a secondary battery as a power supply according to an embodiment;
FIG. 7 is a thermogravimetric curve of a solid material obtained by drying a precursor slurry according to Embodiment 1;
FIG. 8 shows comparison between Fourier transform infrared spectrometry (FTIR) curves of the lithium iron phosphate prepared in Embodiment 1, a solid material obtained by drying a precursor slurry, and an ammonium salt compound;
FIG. 9 is a scanning electron microscopy image of the lithium iron phosphate prepared in Embodiment 1;
FIG. 10 is a scanning electron microscopy image of the lithium iron phosphate prepared in Embodiment 5;
FIG. 11 is a scanning electron microscopy image of the lithium iron phosphate prepared in Embodiment 6; and
FIG. 12 is a scanning electron microscopy image of the lithium iron phosphate prepared in Comparative Embodiment 1.

List of reference numerals:
1. battery pack; 2. upper box; 3. lower box; 4. battery cell; 41. housing; 42. electrode assembly; 43. cover plate; 5. electrical device.

### DETAILED DESCRIPTION OF EMBODIMENTS

To make the above objectives, features, and advantages of this application more apparent and comprehensible, the following describes specific embodiments of this application in detail. Many details are expounded in the following description to facilitate thorough understanding of this application. However, this application can be implemented in many other ways different from those described herein. A person skilled in the art may make similar improvements without departing from the essence of this application. Therefore, this application is not limited to the specific embodiments disclosed below.

In addition, the technical terms such as "first" and "second" are used merely for ease of description, but not to indicate or imply relative importance or implicitly specify the number of technical features mentioned. Therefore, the features preceded by "first" or "second" may explicitly or implicitly include at least one of such features. In the description of this application, unless otherwise expressly specified, "a plurality of" means at least two, for example, two, three, or more.

As used herein, the term "alkyl" is a group formed from an alkane by the loss of one hydrogen atom, for example, a methyl formed from methane by the loss of one hydrogen atom. The term "alkenyl or alkynyl" means a group formed by removing one hydrogen atom from an alkene or alkyne, for example, a vinyl group formed by removing one hydrogen atom from ethylene, or an ethynyl group formed by removing one hydrogen atom from acetylene.

In this application, the term "C₁ to C₅ alkyl" means an alkyl group containing a specified number of carbon atoms, where the specified number is 1 to 5, including 1, 2, 3, 4, and 5. Non-limiting examples of such alkyl groups include methyl (derived from methane), ethyl (derived from ethane), and n-propyl (derived from n-propane).

In this application, when a functional group is said to be "substituted or unsubstituted", the functional group may contain a substituent or not.

In conventional technology, conventional lithium iron phosphate is mainly prepared by synthesizing phosphorus and iron, and the preparation process mainly includes: mixing iron phosphate, a lithium source, and a carbon source in a solvent to obtain a slurry, and then sintering the slurry. In order to increase the solid content of the slurry to increase throughput, a dispersant is typically added during the mixing to reduce the probability of slurry agglomeration.

In some technologies, lithium iron phosphate is prepared from conventional polymer dispersants such as polyvinylpyrrolidone PVP and polyvinyl alcohol PVA. However, such polymer dispersants gel at room temperature, the slurry is more viscous and needs to be heated to flow, thereby being unsuitable for industrial production.

In some other technologies, an alkali metal salt of a micromolecular organic acid is used as a dispersant, thereby reducing the viscosity of the slurry and increasing the solid content of the slurry. Further experimental studies show that, when the alkali metal salt of the organic acid is used as a dispersant, the Na⁺, K⁺, and other ions contained in the alkali metal salt are not easy to decompose during sintering. Most of the ions still remain in the lithium iron phosphate, resulting in an increase in the content of the alkali metal element in the lithium iron phosphate. When applied to preparation of batteries, such lithium iron phosphate produces an adverse effect on the performance of the battery.

Therefore, after a lot of exploration, the applicant hereof has developed the lithium iron phosphate and a preparation method thereof disclosed in this application.

According to an embodiment of this application, a method for preparing lithium iron phosphate is provided, including the following steps S10 to S20.

Step S10: Mix iron phosphate, a lithium source, a carbon source, a dispersant, and a solvent to make a precursor slurry.

Step S20: Sinter the precursor slurry to make lithium iron phosphate.

The dispersant includes an ammonium salt compound represented by Formula (1):

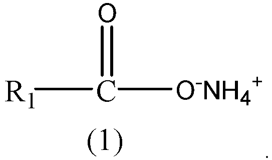

In the formula above, R₁ is a carbon-containing organic group.

In the method for preparing lithium iron phosphate, the iron phosphate, the lithium source, the carbon source, the dispersant, and the solvent are mixed first. The dispersant includes an ammonium salt compound of a specified structure. The ammonium salt compound forms a negatively charged ion group after being ionized. The negatively charged end of the group is adsorbed onto the surface of the iron phosphate constituent in the precursor slurry. The carbon-containing organic group at the other end of the group stretches to form a steric hindrance. The probability of agglomeration between solid particles in the precursor slurry is reduced by the steric hindrance, thereby facilitating reaction of the constituents during the subsequent sintering, and improving the microstructural integrity of the resulting lithium iron phosphate. In this way, the morphology of the resulting lithium iron phosphate particles is superior, and the structure of the particles is more stable. In addition, the ammonium salt compound decomposes into an easily vaporizable product during the sintering, thereby reducing the by-products in the lithium iron phosphate, and improving the charge and discharge capacities of the secondary battery.

In the method for preparing lithium iron phosphate, the ammonium salt compound of a specified structure exerts a strong effect of dispersing. Even if the solid content of the precursor slurry is relatively high, the morphology of the resulting lithium iron phosphate particles is superior, and the microstructure of the particles is complete.

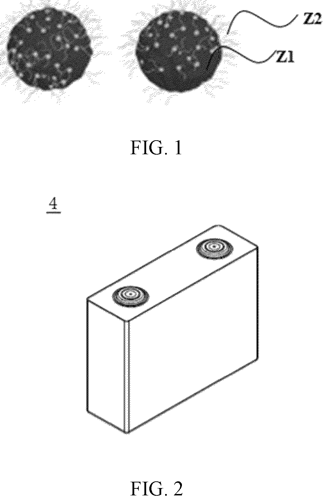

Referring to FIG. 1, FIG. 1 is a schematic diagram of a mechanism of action of a dispersant during preparation of lithium iron phosphate according to an embodiment, in which Z1 represents iron phosphate, Z2 represents ammonium salt compound. The negatively charged end of the group is adsorbed onto the surface of the iron phosphate as a constituent in the precursor slurry. The carbon-containing organic group at the other end of the group stretches out to form a steric hindrance.

In some embodiments, the relative molecular mass of the ammonium salt compound is 100 to 5000.

In some embodiments, the relative molecular mass of the ammonium salt compound is 100 to 1000.

In some embodiments, the relative molecular mass of the ammonium salt compound is 100 to 500.

The "relative molecular mass" means a sum of the relative atomic masses (Ar) of all atoms in a chemical formula.

In some embodiments, the ammonium salt compound includes at least one of compounds represented by Formula (1A) to Formula (1B):

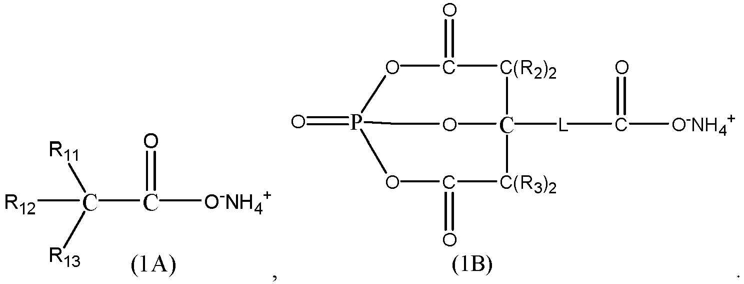

In the formulas above, R₁₁ to R₁₃ each are independently selected from hydrogen, a substituted or unsubstituted C₁ to C₅ alkyl group, a hydroxyl group, or - C(O)O⁻NH₄⁺.

Each R₂ and each R₃ are any one independently selected from hydrogen or a substituted or unsubstituted C₁ to C₅ alkyl group.

L is any one selected from a single bond, a C₁ to C₅ alkylene, or a C₁ to C₅ alkylene in which a hydrogen atom is substituted by -C(O)O⁻NH₄⁺.

Using the compounds of Formula (1A) and Formula (1B) as a dispersant can improve the microstructural stability of the resulting lithium iron phosphate. Especially, the compound of Formula (1B) further contains a specified phosphate ester structure of relatively high activity, and can exert an effect of dispersing while stimulating the reaction between the iron phosphate, lithium source, and carbon source and inducing the formation of lithium iron phosphate, thereby further improving the microstructural stability of the resulting lithium iron phosphate.

Furthermore, the compound of Formula (1B) stimulating the reaction between the iron phosphate, lithium source, and carbon source can reduce the temperature of the subsequent sintering. The lithium iron phosphate of a complete microstructure can be obtained at just a relatively low temperature. The relatively low sintering temperature can also reduce the side reactions during the sintering, reduce the by-product impurities such as elemental iron and iron phosphide in the resulting lithium iron phosphate, and further improve the charge-discharge capacity of the secondary battery.

In some embodiments, R₁₁ to R₁₃ each are independently selected from hydrogen, an unsubstituted C₁ to C₅ alkyl group, a hydroxy-substituted C₁ to C₅ alkyl group, a hydroxyl group, or -C(O)O⁻NH₄⁺.

In some embodiments, R₁₁ to R₁₃ each are independently selected from hydrogen, an unsubstituted C₁ to C₅ chain alkyl group, a hydroxy-substituted C₁ to C₅ chain alkyl group, a hydroxyl group, or -C(O)O⁻NH₄⁺.

In some embodiments, R₁₁ to R₁₃ each are independently selected from hydrogen, an unsubstituted C₁ to C₃ chain alkyl group, a hydroxy-substituted C₁ to C₃ chain alkyl group, a hydroxyl group, or -C(O)O⁻NH₄⁺.

In some embodiments, R₁₁ to R₁₃ each are independently selected from hydrogen, methyl, ethyl, propyl, hydroxyl, or -C(O)O⁻NH₄⁺.

In some embodiments, at least one of R₁₁ to R₁₃ is -C(O)O⁻NH₄⁺.

A larger amount of the -C(O)O⁻NH₄⁺ group in the compound represented by Molecular Formula (1A) produces higher dispersibility.

In some embodiments, at least two of R₁₁ to R₁₃ are -C(O)O⁻NH₄⁺.

In some embodiments, each R₂ and each R₃ are any one independently selected from hydrogen or an unsubstituted C₁ to C₅ alkyl group.

In some embodiments, each R₂ and each R₃ are any one independently selected from hydrogen or an unsubstituted C₁ to C₅ chain alkyl group.

In some embodiments, each R₂ and each R₃ are any one independently selected from hydrogen or an unsubstituted C₁ to C₃ chain alkyl group.

In some embodiments, each R₂ is identical.

In some embodiments, each R₃ is identical.

In some embodiments, R₂ is identical to R₃.

In some embodiments, L is selected from a single bond or a C₁ to C₅ alkylene in which a hydrogen atom is substituted by -C(O)O⁻NH₄⁺.

In some embodiments, L is selected from a single bond or a C₁ to C₃ alkylene in which a hydrogen atom is substituted by -C(O)O⁻NH₄⁺.

A method for preparing the compound of Formula (1B) is as follows:
Mixing and reacting a compound (a) and diammonium hydrogen phosphate to make a compound of Formula (1B).

The structure of the diammonium hydrogen phosphate is:

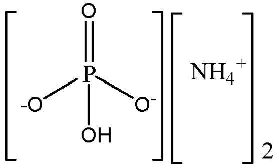

The structure of the compound (a) is:

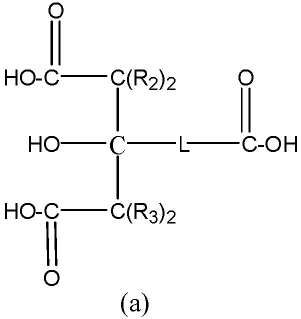

In some embodiments, during the mixing and reaction, the pH value of a reaction solution is maintained at 5.0 to 7.4.

In some embodiments, the duration of the mixing and reaction is 4 to 24 hours.

During the mixing and reaction, a condensation reaction and a dehydration reaction occur, including a condensation esterification reaction and a condensation etherification reaction.

The selection of the types of L, each R₂, and each R₃ is the same as above, and is not repeated here again.

In some embodiments, the ammonium salt compound includes at least one of compounds represented by Formula (2A) to Formula (2B):

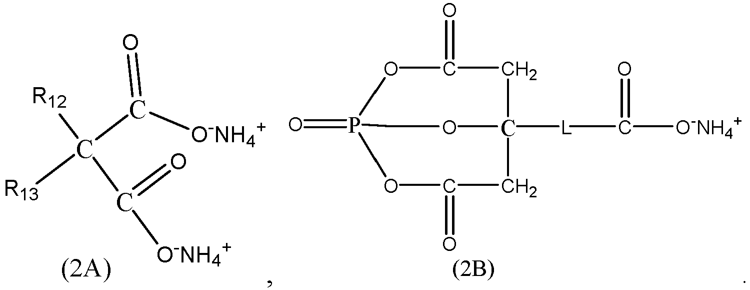

In some embodiments, the ammonium salt compound includes at least one of ammonium citrate, diammonium citrate, or a compound represented by Formula (b-1) or Formula (b-2):

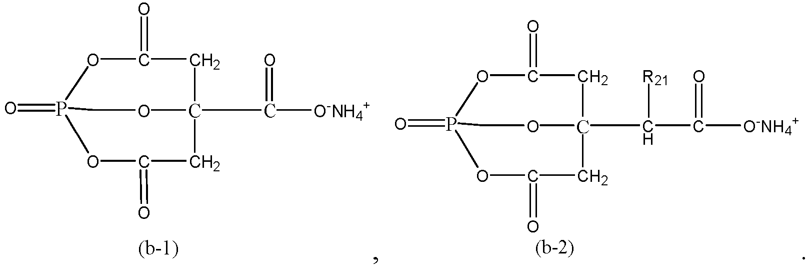

In the formulas above, R₂₁ is selected from a C₁ to C₃ alkyl group or -C(O)O⁻NH₄⁺.

In some embodiments, R₂₁ is -C(O)O⁻NH₄⁺.

In some embodiments, the mass of the dispersant is 0.3% to 7% of the mass of the iron phosphate.

In some embodiments, the mass of the dispersant is 0.5% to 1% of the mass of the iron phosphate.

By regulating the mass percent of the dispersant, this application further improves the microstructural stability of the resulting lithium iron phosphate, and the sphericity is high.

In the value range "0.3% to 7%" includes the minimum and maximum values of the range and every value between the minimum value and the maximum value. Specific examples of the value in the value range include, but are not limited to, the individual values enumerated in the embodiments and 0.3%, 0.3%, 0.4%, 0.5%, 0.6%, 0.7%, 0.8%, 0.9%, 1%, 1.3%, 1.5%, 1.7%, 1.9%, 2%, 2.1%, 2.3%, 2.5%, 2.7%, 2.9%, 3%, 3.1%, 3.3%, 3.5%, 3.7%, 3.9%, 4%, 4.1%, 4.3%, 4.5%, 4.7%, 4.9%, 5%, 5.1%, 5.3%, 5.5%, 5.7%, 5.9%, 6%, 6.1%, 6.3%, 6.5%, 6.7%, 6.9%, 7%, or a range formed by any two thereof, for example, the range is 0.3% to 7%, 0.3% to 6%, 0.3% to 5%, 0.3% to 4%, 0.3% to 3%, 0.3% to 2%, 0.3% to 1%, 0.3% to 0.5%, 0.5% to 7%, 0.5% to 6%, 0.5% to 5%, 0.5% to 4%, 0.5% to 3%, 0.5% to 2%, 0.5% to 1%, 1% to 7%, 1% to 6%, 1% to 5%, 1% to 4%, 1% to 3%, or 1% to 2%.

In some embodiments, the sintering is performed at a temperature of 780 °C to 820 °C.

Optionally, the sintering is performed at a temperature of 750 °C to 790 °C.

The ammonium salt compound of the specified structure used as a dispersant can stimulate the generation of the lithium iron phosphate. The lithium iron phosphate of a complete microstructure can be obtained at just a relatively low temperature. The relatively low sintering temperature can also reduce the side reactions during the sintering, reduce the by-product impurities such as elemental iron and iron phosphide in the resulting lithium iron phosphate, and further improve the charge-discharge capacity of the secondary battery.

The value range "780 °C to 820 °C" includes the minimum and maximum values of the range, and every value between the minimum value and the maximum value. Specific examples of the value in the value range include, but are not limited to, the individual values enumerated in the embodiments and 780 °C, 790 °C, 800 °C, 810 °C, 820 °C or a range formed by any two thereof.

In some embodiments, the sintering is performed for a duration of 19 to 21 hours.

In some embodiments, the mixing process in step S10 specifically includes:
mixing a dispersant and a solvent to form a mixture; and
mixing iron phosphate, a lithium source, a carbon source, and the mixture to make a slurry.

In some embodiments, the mixing process is performed under stirring conditions, and continues for a duration of 0.5 to 1 hour.

In some embodiments, before the sintering step, the method further includes a step of spray-drying the precursor slurry.

After completion of the spray-drying, a solid precursor in the form of spherical particles is obtained.

In some embodiments, the spray-drying is performed at a temperature of 280 °C to 350 °C.

In some embodiments, the molar ratio of lithium in the lithium source to the phosphorus and iron in the iron phosphate complies with the stoichiometry of lithium iron phosphate (LiFePO₄).

In some embodiments, the mass of the lithium source is 0.235% to 0.25% of the mass of the iron phosphate.

In some embodiments, the mass of the lithium source is 0.237% to 0.25% of the mass of the iron phosphate.

In some embodiments, the mass of the carbon source is 5% to 15% of the mass of the iron phosphate.

In some embodiments, the mass of the carbon source is 5% to 10% of the mass of the iron phosphate.

In some embodiments, the mass of the carbon source is 5% to 9% of the mass of the iron phosphate.

In some embodiments, the mass of the carbon source is 6% to 9% of the mass of the iron phosphate.

In some embodiments, the carbon source includes at least one of glucose, sucrose, starch, phenolic resin, cyclodextrin, polyethylene, polyethylene glycol, or polyvinyl alcohol.

In some embodiments, the lithium source includes at least one of lithium hydroxide monohydrate, lithium carbonate, lithium dihydrogen phosphate, lithium phosphate, or lithium acetate.

In some embodiments, the solid content of the precursor slurry is greater than or equal to 45%.

In some embodiments, the solid content of the precursor slurry is 45% to 55%.

In the method for preparing lithium iron phosphate, the ammonium salt compound of a specified structure exerts a strong effect of dispersing. Even if the solid content of the precursor slurry is relatively high, the morphology of the resulting lithium iron phosphate particles is superior, and the microstructure of the particles is complete, thereby increasing the throughput significantly.

In some embodiments, the solvent includes at least one of water or an alcohol organic solvent.

In some embodiments, the solvent includes water.

In some embodiments, this application further provides a lithium iron phosphate. The lithium iron phosphate is prepared by the above method for preparing lithium iron phosphate.

In the method for preparing lithium iron phosphate, the dispersant includes an ammonium salt compound of a specified structure. The ammonium salt compound forms a negatively charged ion group after being ionized. The negatively charged end of the group is adsorbed onto the surface of the iron phosphate constituent in the precursor slurry. The carbon-containing organic group at the other end of the group stretches to form a steric hindrance. The probability of agglomeration between solid particles in the precursor slurry is reduced by the steric hindrance, thereby facilitating reaction of the constituents during the subsequent sintering, and improving the microstructural integrity of the resulting lithium iron phosphate. In this way, the morphology of the resulting lithium iron phosphate particles is superior, and the structure of the particles is more stable. In addition, the ammonium salt compound decomposes into an easily vaporizable product during the sintering, thereby reducing the by-products in the lithium iron phosphate, and improving the charge and discharge capacities of the secondary battery.

According to an embodiment, this application provides an ammonium salt compound. The ammonium salt compound is represented by Formula (1B):

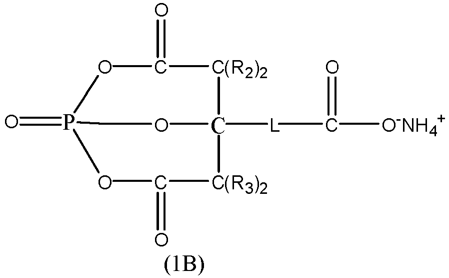

Each R₂ and each R₃ are any one independently selected from hydrogen or a substituted or unsubstituted C₁ to C₅ alkyl group.

The selection of the types of each R₂ and each R₃ is the same as above, and is not repeated here again.

The method for preparing the ammonium salt compound represented by Formula (1B) is the same as above and is not described here again.

This application further provides application of the ammonium salt compound in preparation of lithium iron phosphate.

The compound of Formula (1B) further contains a specified phosphate ester structure of relatively high activity, and, when applied to preparing lithium iron phosphate, can exert an effect of dispersing while stimulating the reaction between the iron phosphate, lithium source, and carbon source and inducing the formation of lithium iron phosphate, thereby further improving the microstructural stability of the resulting lithium iron phosphate.

Furthermore, the compound of Formula (1B) stimulating the reaction between the iron phosphate, lithium source, and carbon source can reduce the temperature of the subsequent sintering. The lithium iron phosphate of a complete microstructure can be obtained at just a relatively low temperature. The relatively low sintering temperature can also reduce the side reactions during the sintering, reduce the by-product impurities such as elemental iron and iron phosphide in the resulting lithium iron phosphate, and further improve the charge-discharge capacity of the secondary battery.

In some embodiments, the ammonium salt compound serves as a dispersant.

According to an embodiment, this application further provides a positive electrode plate. The positive electrode plate includes a current collector and a positive active layer disposed on a surface of the current collector. Constituents of the positive active layer include the lithium iron phosphate.

In some embodiments, based on a total mass of the positive active layer, a mass percent of the lithium iron phosphate material in the positive active material is 80 wt% to 100 wt%.

In any embodiment of this application, the constituents of the positive active layer further include a positive conductive agent and a positive electrode binder.

The positive conductive agent may be a conductive agent commonly used in the art, including but not limited to, at least one of graphite, carbon nanotubes, nanofibers, carbon black, or graphene. Specifically, the conductive agent may be at least one selected from SP, KS-6, acetylene black, branched Ketjen black ECP, SFG-6, vapor-grown carbon fibers VGCF, carbon nanotubes CNTs, graphene, or a composite conductive agent compounded thereof.

Based on the total mass of the positive active layer, a mass percent of the positive conductive agent in the positive active material is 0 to 20 wt%.

In any embodiment of this application, the positive electrode binder may be at least one of polyvinylidene difluoride (PVDF), polytetrafluoroethylene (PTFE), poly(vinylidene fluoride-co-tetrafluoroethylene-co-propylene), poly(vinylidene fluoride-co-hexafluoropropylene-co-tetrafluoroethylene), poly(tetrafluoroethylene-co-hexafluoropropylene), hydrogenated nitrile rubber, styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), carboxymethyl chitosan (CMCS), or fluorine-containing acrylate resin.

Based on the total mass of the positive active layer, a mass percent of the positive electrode binder in the positive active material is 0 to 30 wt%.

In any embodiment of this application, the positive electrode plate may be prepared by the following method: dispersing the constituents of the positive electrode plate into a solvent (such as N-methyl-pyrrolidone) to form a positive electrode slurry, coating a current collector with the positive electrode slurry, and performing steps such as oven-drying and cold-pressing to obtain a positive electrode plate; where the solid content of the positive electrode slurry is 40 wt% to 80 wt%; adjusting the viscosity of the slurry at a room temperature to 5000 mPa·s to 25000 mPa·s, and coating a surface of the positive current collector with the positive electrode slurry; oven-drying the slurry, cold-pressing the current collector with a cold-pressing machine to form a positive electrode plate.

In some embodiments, the compaction density of the positive electrode plate is 3.0 g/cm³ to 3.6 g/cm³, and optionally 3.3 g/cm³ to 3.5 g/cm³. The compaction density is calculated by the following formula:
compaction density = coating areal density/(thickness of pressed electrode plate - thickness of current collector).

According to an embodiment, this application provides a secondary battery. The battery includes the lithium iron phosphate or positive electrode plate.

The secondary battery further includes a negative electrode plate, a separator, and an electrolyte solution. The following describes the negative electrode plate, the separator, and the electrolyte solution exemplarily, including but not limited to:
Electrolyte solution: Generally, the electrolyte solution includes an electrolyte salt and a solvent.

In some embodiments, the electrolyte salt may an electrolyte salt commonly used in the art, such as lithium-ion electrolyte salt.

As an example, the lithium-ion electrolyte salt includes, but is not limited to, one or more of lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bistrifluoromethanesulfonimide (LiTFSI), lithium trifluoromethanesulfonate (LiTFS), lithium difluoro(oxalato) borate (LiDFOB), lithium bis(oxalato)borate (LiBOB), lithium difluorophosphate (LiPO₂F₂), lithium difluoro(bisoxalato)phosphate (LiDFOP), or lithium tetrafluoro(oxalato)phosphate (LiTFOP).

In some embodiments, the solvent may be one or more selected from fluoroethylene carbonate (FEC), ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS), or (ethylsulfonyl)ethane (ESE).

In some embodiments, the concentration of the electrolyte salt in the electrolyte solution is typically 0.5 mol/L to 15 mol/L.

In some embodiments, the electrolyte solution further optionally includes an additive. For example, the additive may include a negative electrode film-forming additive or a positive electrode film-forming additive. The additive may further include an additive capable of improving specified performance of the battery, for example, an additive for improving overcharge performance of the battery, or an additive for improving high- or low-temperature performance of the battery.

Separator: The separator is disposed between the positive electrode plate and the negative electrode plate.

The type of the separator in this application may be any well-known porous separator that is highly stable both chemically and mechanically.

In some embodiments, the separator may be made of a material that is at least one selected from glass fiber, non-woven fabric, polyethylene, polypropylene, and polyvinylidene difluoride. The separator may be a single-layer film or a multilayer composite film. When the separator is a multilayer composite film, materials in different layers may be identical or different.

The thickness of the separator is controlled to be 2 µm to 15 µm, and optionally, the thickness of the separator is controlled to be 2 µm to 13 µm.

Negative electrode plate: The negative electrode plate may be a negative electrode plate for use in various secondary battery systems in the art.

In some embodiments, the secondary battery is a lithium metal secondary battery, and the negative electrode plate may be a negative electrode plate well-known in the art for use in a lithium metal battery.

In some embodiments, the negative electrode plate may be a lithium-containing metal sheet directly.

In some other embodiments, the negative electrode plate includes a lithium-containing metal layer and a conductive layer stacked up.

Further, the lithium-containing metal in the lithium-containing metal sheet and the lithium-containing metal layer may be lithium metal, or an alloy formed by lithium metal and another metal or a non-metal element.

Further, the other metal includes at least one of tin (Sn), zinc (Zn), aluminum (Al), magnesium (Mg), silver (Ag), gold (Au), gallium (Ga), indium (In), or platinum (Pt); and the non-metal element includes at least one of boron (B), carbon (C), or silicon (Si).

In some embodiments, the conductive layer may be copper foil.

In any embodiment of this application, the negative electrode plate may be prepared by the following method: calendering a lithium-containing metal sheet directly to obtain a negative electrode plate, or stacking and then calendering the lithium-containing metal layer and the conductive layer to obtain a negative electrode plate.

In some embodiments, the secondary battery is a lithium-ion secondary battery, and the negative electrode plate may be a negative electrode plate well-known in the art for use in a lithium-ion battery.

In some embodiments, the negative electrode plate includes a current collector and a negative active layer carried on a surface of the current collector.

The constituents of the negative active layer include a negative active material.

The negative active material may be a negative active material commonly used in this application.

In any embodiment of this application, the negative active material includes at least one of mesocarbon microbeads, graphite, glassy carbon, carbon nanotubes, carbon-carbon composite material, carbon fibers, hard carbon, soft carbon, silicon-based material, tin-based material, magnesium-based material, or iron-based material.

Optionally, specific examples of the negative active material include, but are not limited to, at least one of mesophase carbon microbeads, natural graphite, artificial graphite, graphene, glassy carbon, carbon nanotubes, carbon fibers, hard carbon, soft carbon, iron oxide, tin oxide, silicon oxide, magnesium oxide, silicon-carbon composite, lithium metal, or lithium metal alloy.

In any embodiment of this application, a mass percent of the negative active material in the negative active layer is 70% to 100%.

In any embodiment of this application, the constituents of the negative active layer further include a negative conductive agent and a negative electrode binder.

In any embodiment of this application, the negative conductive agent may be a conductive material commonly used in the art, including but not limited to, at least one of graphite, carbon nanotubes, nanofibers, carbon black, or graphene. Specifically, the negative conductive agent may include at least one of conductive carbon black (super pll, SP for short), conductive graphite SFG-6, conductive graphite KS-6, acetylene black, branched superconducting carbon black Ketjen black (ECP), vapor-grown carbon fibers (VGCF), carbon nanotubes (CNTs), graphene, or a composite conductive agent compounded thereof.

Based on the total mass of the negative active layer, a mass percent of the negative conductive agent in the negative active material is 0 to 20 wt%.

The negative electrode binder may be a binder commonly used in the art, and may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethyl acrylic acid (PMAA), or carboxymethyl chitosan (CMCS).

Based on the total mass of the negative active layer, a mass percent of the negative electrode binder in the negative active material is 0 to 30 wt%.

In any embodiment of this application, the negative active layer further optionally includes other additives, such as a thickener, for example, sodium carboxymethyl cellulose (CMC-Na). Based on the total mass of the negative active layer, a mass percent of other additives in the negative active material is 0 to 15 wt%.

In any embodiment of this application, the current collector in the negative electrode plate may be metal foil or a composite current collector. For example, the metal foil may be copper foil.

The composite current collector may include a polymer material substrate and a metal layer formed on at least one surface of the polymer material substrate. The composite current collector may be formed by disposing a metal material on a polymer material substrate.

In some embodiments, the metal material is any one selected from aluminum, an aluminum alloy, nickel, a nickel alloy, titanium, a titanium alloy, silver, or a silver alloy.

In some embodiments, the polymer material substrate includes at least one of polypropylene (PP), polyethylene terephthalate (PET), polybutylene terephthalate (PBT), polystyrene (PS), or polyethylene (PE).

In any embodiment of this application, the negative electrode plate may be prepared by the following method: dispersing the ingredients of the negative electrode plate such as the negative active material, the conductive agent, and the binder and any other ingredients in a solvent to form a negative electrode slurry, coating a negative current collector with the negative electrode slurry, and performing steps such as drying and cold calendering to obtain the negative electrode plate.

In some embodiments, the solvent includes, but is not limited to water.

In some embodiments, the solid content of the negative electrode slurry is 30 wt% to 70 wt%. The viscosity of the slurry at 25°C is adjusted to 2000 mPa·s to 10000 mPa·s.

In some embodiments, the areal density of the negative active material in the negative electrode plate is 0.005 g/cm² to 0.03 g/cm².

Areal density of the negative active material = mass of the negative active material/area of the negative electrode plate.

The shape of the secondary battery according to this application may be cylindrical, prismatic or any other shape. For example, FIG. 2 shows a prismatic battery cell 4 as an example.

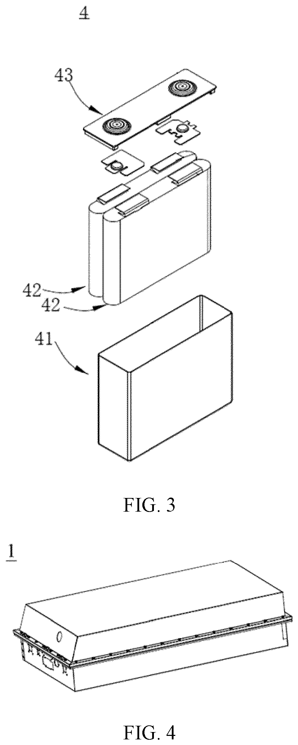

In some embodiments, referring to FIG. 3, the battery cell 4 includes a shell and an electrode assembly 42. The shell may include a housing 41 and a cover plate 43. The housing 41 may include a bottom plate and a side plate connected to the bottom plate. The bottom plate and the side plate close in to form an accommodation cavity. The housing 41 is provided with an opening that communicates to the accommodation cavity. The cover plate 43 can be placed over the opening to seal the accommodation cavity.

The positive electrode plate, the negative electrode plate, and the separator may be made into the electrode assembly 42 by winding or stacking. The electrode assembly 42 is packaged in the accommodation cavity. The electrolyte solution infiltrates in the electrode assembly 42. The number of electrode assemblies 42 contained in the battery cell 4 may be one or more, and is adjustable as required.

This application further provides an electrical device. The electrical device includes the secondary battery.

Further, in the electrical device, the secondary battery may exist in the form of a battery cell, or may be further assembled to form a battery pack.

FIG. 3 and FIG. 4 show a battery pack 1 as an example. The battery pack 1 includes a battery box and one or more battery cells 4 disposed in the battery box. The battery box includes an upper box 2 and a lower box 3. The upper box 2 can be placed over the lower box 3 to form a sealed space for accommodating the battery cell 4.

The plurality of battery cells 4 may be arranged in the battery box in any manner.

The secondary battery or the battery pack assembled from the secondary batteries may be used as a power supply of the electrical device, or used as an energy storage unit of the electrical device.

The electrical device may be, but is not limited to, a mobile device, an electric vehicle, an electric train, watercraft, satellite, an energy storage system, or the like.

In some embodiments, the mobile device may be a mobile phone or a laptop computer or the like.

In some embodiments, the electrical vehicle includes, but is not limited to, a battery electric vehicle, a hybrid electric vehicle, a plug-in hybrid electric vehicle, an electric bicycle, an electric scooter, an electric golf cart, an electric truck, or the like.

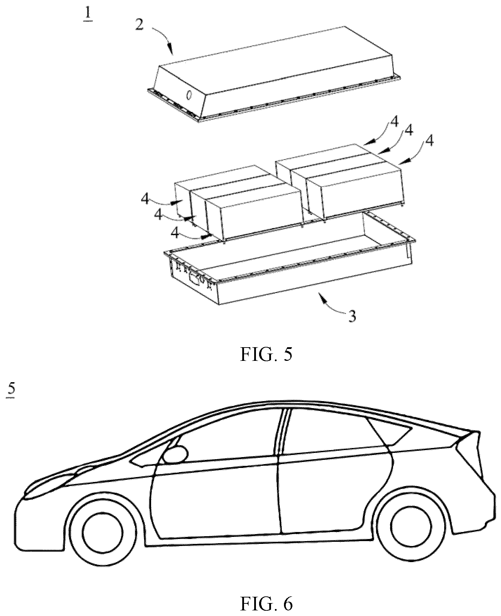

FIG. 5 shows an electrical device 5 as an example. The electrical device 5 may be battery electric vehicle, a hybrid electric vehicle, a plug-in hybrid electric vehicle, or the like. The electrical device 5 may employ a battery pack in order to achieve a high power and a high energy density of the battery.

In another example, the electrical device may be a mobile phone, a tablet computer, a notebook computer, or the like. The device is generally required to be thin and light, and may use a battery as a power supply.

This application is described below with reference to specific embodiments, but is not limited to such embodiments. Understandably, the claims appended hereto outlines the scope of this application. A person skilled in the art is aware that all modifications made to various embodiments of this application under the guidance of the conception hereof are covered by the spirit and scope of the claims of this application.

### Embodiment 1

### S1: Preparing lithium iron phosphate

(1) Dissolving an ammonium salt compound (ammonium citrate) in deionized water to obtain a mixture.
(2) Putting iron phosphate, lithium carbonate, and glucose into an agitation tank, adding the mixture into the agitation tank while the paddle of the agitation tank is stirring, and stirring and grinding the mixture for 20 minutes until a homogeneous state to obtain a precursor slurry. The mass percent of the ammonium salt compound in the mixture is W₁% in relation to the mass of the iron phosphate, the mass percent of the lithium carbonate is W₂% in relation to the mass of the iron phosphate, and the mass percent of the glucose is W₃% in relation to the mass of the iron phosphate, as detailed in Table 1.

### S2: Testing the solid content

(1) Weighing the specimen: Weighing out a specified amount (10 g) of specimen, recording the accuracy and resolution of the weighing device, and recording the mass of the specimen as M₀.
(2) Drying: Adjusting the temperature to 100 °C, placing the specimen into an oven and drying the specimen until the mass no longer changes. Recording the height of the load bar within a fixed time, and recording the dried mass as M₁.
(3) Cooling: Cooling the measuring cup to room temperature, removing condensate and then weighing the specimen.
(4) Calculating the solid content: Solid content = M₁/M₀ × 100%. The specific results are shown in Table 1.

S3: Performing a thermogravimetric analysis on the solid material obtained by drying the precursor slurry: The start temperature is 80 °C and 100 °C separately, the heating rate is 10 °C/min, the protection gas is nitrogen, and the flow rate of the gas is 45 mL/min.

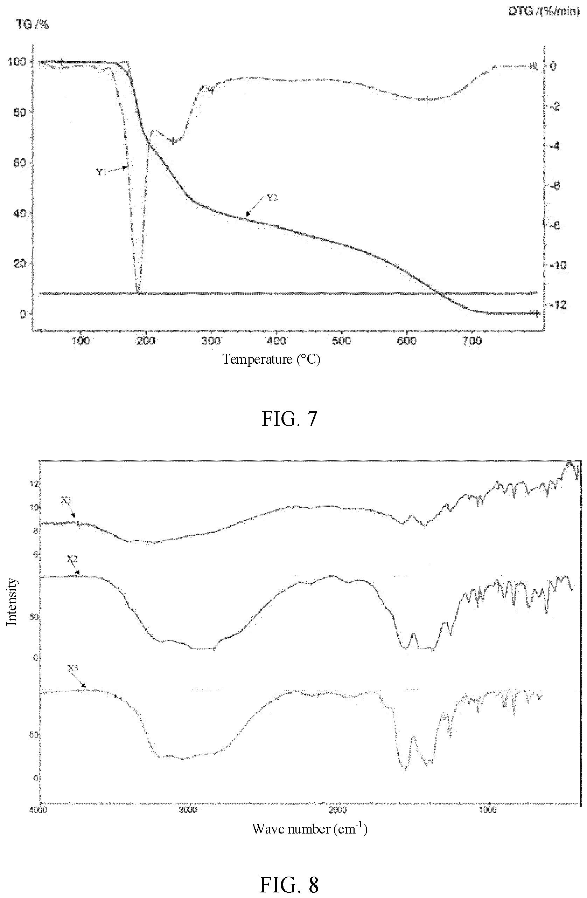

The thermogravimetric analysis curve obtained in the thermogravimetric analysis is shown in FIG. 7, where Y1 is a thermogravimetric analysis (TGA) curve and Y2 is a derivative of TGA (DTG) curve.

S4: Spray-drying the precursor slurry at 100 °C to obtain precursor particles, and then sintering the precursor particles in a nitrogen roller kiln at 750 °C to 790 °C for 20 hours to obtain lithium iron phosphate.

S5: Performing X-ray diffractometry (XRD) and Fourier transform infrared (FTIR) spectrometry on the prepared lithium iron phosphate, the solid material obtained by drying the precursor slurry, and the ammonium salt compound, separately. Determining, based on the characteristic peaks of the above three materials, whether any ammonium salt compound remains in the precursor slurry during the sintering heat treatment.

The FTIR curves of the lithium iron phosphate, the solid material obtained by drying the precursor slurry, and the ammonium salt compound in Fourier transform infrared (FTIR) spectrometry are compared in FIG. 8, in which X1, X2, and X3 are the FTIR curves of the lithium iron phosphate, the solid material obtained by drying precursor slurry, and the ammonium salt compound respectively.

Afterward, with reference to the thermogravimetric analysis curve information in step S3, it is confirmed that the residual amount of the ammonium salt compound in the solid material obtained by drying the precursor slurry is 34.7% at the temperature of 400 °C, the residual amount of the ammonium salt compound is 16.4% at the temperature of 600 °C, and the residual amount of the ammonium salt compound are 1.71% and 0.34% at the temperatures of 700 °C and 800 °C respectively.

As can be seen from the above test results, residual ammonium salt additive remains during sintering heat treatment of the precursor slurry. After completion of sintering, the residual amount is tiny, and most of the residue is decomposed and vaporized.

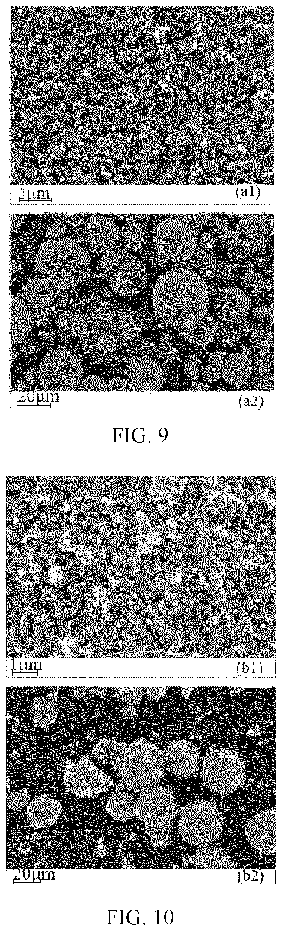

S6: Observing the resulting lithium iron phosphate in a scanning electron microscope at different magnifications. The scanning electron microscopy SEM images are shown in FIG. 9, in which the scale bars of the SEM images (a1) and (a2) are 1 µm and 20 µm respectively. The images show complete spherical particles with smooth surfaces.

S7: Measuring the content of elemental iron in the lithium iron phosphate by a copper sulfate displacement method. The specific results are shown in Table 1.

S8: Preparing a secondary battery

### 1. Preparing a positive electrode plate

Preparing a positive electrode slurry by mixing the above-prepared lithium iron phosphate material, a conductive agent, carbon nanotubes, and polyvinylidene difluoride at a mass ratio of 94: 1.5: 0.5: 3, coating a 13 µm-thick aluminum foil with the slurry, and vacuum-drying the foil at 120 °C, cold-pressing the foil, and cutting and slitting the foil to obtain a positive electrode plate with an areal density of 2.4 mg/cm².

### 2. Preparing an electrolyte solution

Mixing ethylene carbonate (EC), ethyl methyl carbonate (EMC), and diethyl carbonate (DEC) at a volume ratio of EC: EMC: DEC = 1: 1: 1 to obtain an organic solvent, and then dissolving a well-dried lithium salt LiPF₆ in the organic solvent to obtain an electrolyte solution in which the concentration of LiPF₆ is 1 mol/L.

3. Using a polyethylene film as a separator of the lithium-ion battery.

4. Using a 12 µm-thick lithium sheet as a negative electrode plate.

5. Assembling a secondary battery: Stacking the positive electrode plate, the separator, and the negative electrode in sequence so that the separator is located between the positive electrode and the negative electrode to serve a purpose of isolation. Winding the stacked structure to obtain a bare cell. Putting the bare cell into an outer package, and injecting the prepared electrolyte solution. Sealing the package, and performing steps such as chemical formation and degassing to obtain a secondary battery.

S9: Determining the gravimetric charge capacity

Leaving the secondary battery to stand for 4 hours, and placing the battery onto a LAND tester for testing. The test process is as follows: charging the battery at a constant current of 0.1C until the voltage reaches 3.75 V, discharging the battery at a constant voltage of 3.75 V until the current drops to 50 µA, leaving the battery to stand for 5 minutes, and then discharging the battery at a constant current of 0.1C until the voltage drops to 2 V, and then leaving the battery to stand for 5 minutes.

2) Performing step 1) twice, recording the charge capacity of the battery in each charging step or the discharge capacity in each discharging step during the test, calculating a cumulative charge capacity and a cumulative discharge capacity, dividing the cumulative charge capacity by the mass of the lithium iron phosphate contained in the battery to obtain the gravimetric charge capacity, and dividing the cumulative discharge capacity by the mass of the lithium iron phosphate contained in the battery to obtain a gravimetric discharge capacity.

The test tolerance is ±2 mAh/g.

The specific results are shown in Table 1.

### Embodiments 2 to 3

Embodiments 2 to 3 are substantially identical to Embodiment 1 except that: the type of the ammonium salt compound used in step S1 is different from that in Embodiment 1, diammonium citrate is used instead in Embodiment 2, and the following ammonium salt compound shown in Formula (b-1) is used instead in Embodiment 3:

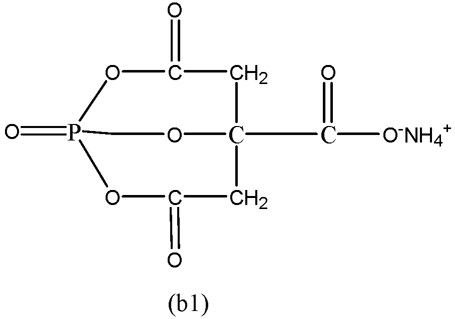

The preparation process of the ammonium salt compound represented by Formula (b-1) is as follows:
Step 1: Diluting phosphoric acid with water to form dilute phosphoric acid in which the mass ratio of water to phosphoric acid is 1.3: 1; adding the dilute phosphoric acid into an enameled reaction tank equipped with a paddle and a jacket; introducing ammonia gas through a round-pipe ammonia distributor to perform neutralization reaction while stirring; when the pH value of the reaction solution becomes 8 to 9 through neutralization, filtering the reaction solution in a hot state to obtain diammonium hydrogen phosphate; subsequently, dripping soluble citric acid in continuously to keep the pH value of the reaction solution at 5.0 to 7.4; reacting thoroughly for 12 hours to obtain a reaction solution product. Subsequently, heating the reaction solution product in a crystallizer to control evaporation and crystallization, where the evaporation temperature is 55 °C, and the supersaturation level is 1.02 throughout the whole process; centrifuging the resulting crystal to separate a solid product from the solution, and finally drying the solid product at 55 °C for 20 minutes to obtain a crystalline solid of the ammonium salt compound represented by Formula (b-1).

The structure of the diammonium hydrogen phosphate is:

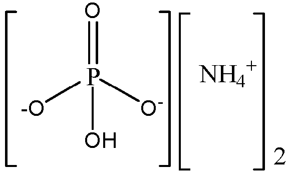

The structure of the citric acid is:

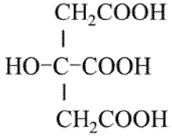

The remaining steps are the same as those in Embodiment 1. The detailed parameters are shown in Table 1.

### Embodiments 4 to 9

Embodiments 4 to 9 are substantially identical to Embodiment 3 except that: the amounts of the ammonium salt compound and the deionized water in step S1 are adjusted, and W₁% is changed without changing the solid content of the precursor slurry.

The remaining steps are the same as those in Embodiment 1. The detailed parameters are shown in Table 1.

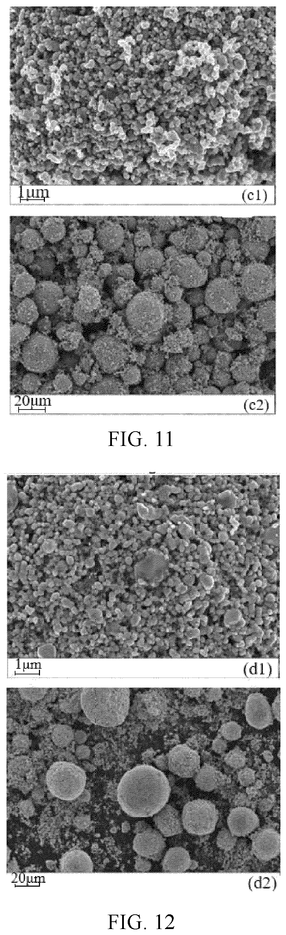

Observing the resulting lithium iron phosphate of Embodiment 5 in a scanning electron microscope SEM at different magnifications, with the SEM image shown in FIG. 10, in which the scale bars of the SEM images of (b1) and (b2) are 1 µm and 20 µm respectively; observing the resulting lithium iron phosphate of Embodiment 6 in the scanning electron microscope at different magnifications, with the SEM image shown in FIG. 11, in which the scale bars of the SEM images of (c1) and (c2) are 1 µm and 20 µm respectively. As can be seen from the images, the morphology of the spherical particles is complete, and the surface of the particles is smooth.

### Embodiments 10 to 13

Embodiments 10 to 13 are substantially identical to Embodiment 1 except that the amounts of glucose, ammonium salt compound, and deionized water in step S1 are adjusted, and W₁% and W₃% are changed without changing the solid content of the precursor slurry.

The remaining steps are the same as those in Embodiment 1. The detailed parameters are shown in Table 1.

### Embodiment 14

Embodiment 14 is substantially identical to Embodiment 1 except that: the amount of the deionized water in step S1 are adjusted in step S1, so as to change the solid content of the precursor slurry.

The remaining steps are the same as those in Embodiment 1. The detailed parameters are shown in Table 1.

### Embodiments 15 to 16

Embodiments 15 to 16 are substantially identical to Embodiment 14 except that: the amounts of the ammonium salt compound and the deionized water in step S1 are adjusted, and the W₁% or W₃% or solid content is changed. as detailed in Table 1.

The remaining steps are the same as those in Embodiment 1. The detailed parameters are shown in Table 1.

### Comparative Embodiments 1 to 2

Comparative Embodiments 1 to 2 are substantially identical to Embodiment 1 except that: no ammonium salt compound is added in step S1, the amount of the deionized water is adjusted, and the solid content of the precursor slurry or W₃% is changed.

The remaining steps are the same as those in Embodiment 1. The detailed parameters are shown in Table 1.

Observing the resulting lithium iron phosphate of Comparative Embodiment 1 in a scanning electron microscope at different magnifications. The scanning electron microscopy SEM images are shown in FIG. 12, in which the scale bars of the SEM images of (d1) and (d2) are 1 µm and 20 µm respectively, and the surface of the particles is relatively rough.

### Comparative Embodiment 3

Comparative Embodiment 3 is substantially identical to Embodiment 1 except that: the type of the ammonium salt compound used in step S1 is different from that in Embodiment 1, and sodium citrate is used instead in Comparative Embodiment 3.

The remaining steps are the same as those in Embodiment 1. The detailed parameters are shown in Table 1.

The relevant parameters and performance test results in various embodiments and comparative embodiments are shown in Table 1.

**Table 1**

| | Precursor slurry | | | | | Lithium iron phosphate | Secondary battery | |
|---|---|---|---|---|---|---|---|---|
| | Ammonium salt compound | W₁% | W₂% | W₃% | Solid content (%) | Content of elemental iron (µg/kg) | Charge capacity (mAh/g) | Discharge capacity (mAh/g) |
| Embodiment 1 | Ammonium citrate | 0.6% | 0.242% | 8.32% | 45% | 0.8 | 160.3 | 156.5 |
| Embodiment 2 | Diammonium citrate | 0.6% | 0.242% | 8.32% | 45% | 0.8 | 159.5 | 155.8 |
| Embodiment 3 | (b-1) | 0.6% | 0.242% | 8.32% | 45% | 0 | 162.1 | 159.9 |
| Embodiment 4 | (b-1) | 0.3% | 0.242% | 8.32% | 45% | 1.2 | 160.4 | 157.1 |
| Embodiment 5 | (b-1) | 0.8% | 0.242% | 8.32% | 45% | 0 | 162.5 | 158.7 |
| Embodiment 6 | (b-1) | 1% | 0.242% | 8.32% | 45% | 0 | 162.8 | 158.1 |
| Embodiment 7 | (b-1) | 3% | 0.242% | 8.32% | 45% | 0 | 162.9 | 158.9 |
| Embodiment 8 | (b-1) | 5% | 0.242% | 8.32% | 45% | 0 | 163.0 | 161.3 |
| Embodiment 9 | (b-1) | 7% | 0.242% | 8.32% | 45% | 0 | 164.2 | 161.8 |
| Embodiment 10 | Ammonium citrate | 0.8% | 0.242% | 8.3% | 45% | 0 | 162.3 | 158.7 |
| Embodiment 11 | Ammonium citrate | 0.8% | 0.242% | 8.2% | 45% | 0 | 162.3 | 158.7 |
| Embodiment 12 | Ammonium citrate | 0.8% | 0.242% | 8.1% | 45% | 0 | 162.3 | 158.7 |
| Embodiment 13 | Ammonium citrate | 0.8% | 0.242% | 8% | 45% | 0 | 159.1 | 156.7 |
| Embodiment 14 | Ammonium citrate | 0.6% | 0.242% | 8.32% | 50% | 0 | 162.1 | 159.1 |
| Embodiment 15 | Ammonium citrate | 0.8% | 0.242% | 8.32% | 50% | 0 | 162.3 | 158.7 |
| Embodiment 16 | Ammonium citrate | 1% | 0.242% | 5% | 55% | 0 | 158.1 | 154.6 |
| Comparative Embodiment 1 | / | 0 | 0.242% | 8.51% | 39% | 25 | 156 | 152 |
| Comparative Embodiment 2 | / | 0 | 0.242% | 8.32% | 50% | 25 | 155 | 151 |
| Comparative Embodiment 3 | Sodium citrate | 0.6% | 0.242% | 8.32% | 45% | 30 | 158 | 153.6 |

| | | | | | | | | |
|---|---|---|---|---|---|---|---|---|
| Note: "/" means absence of the substance. | | | | | | | | |

As can be seen from the data of the embodiments and comparative embodiments in Table 1, the lithium iron phosphate particles prepared by the method for preparing lithium iron phosphate according to this application can improve charge and discharge capacities of the secondary battery.

In the method for preparing lithium iron phosphate, the ammonium salt compound of a specified structure exerts a strong effect of dispersing. Even if the solid content of the precursor slurry is relatively high, the morphology of the resulting lithium iron phosphate particles is superior, and the microstructure of the particles is complete.

Further, as can be seen from the data of Embodiments 3 to 9, within a specified range, a higher mass percent W₁% of the dispersant in relation to the mass of the iron phosphate makes the microstructure of the resulting lithium iron phosphate more complete, and leads to higher charge and discharge capacities of the secondary battery. When W₁% is close to 1%, the growth rate of the charge and discharge capacities of the secondary battery almost reaches a balance. If W₁% still continues to increase, the growth rate of the charge and discharge capacities of the secondary battery becomes relatively small, and the charge and discharge capacities have increased to such a level that gives rise to a high degree of lithium plating, thereby producing an adverse effect on the lifespan of the secondary battery. In this way, the range of W₁% can be further controlled to further increase the charge and discharge capacities of the secondary battery while reducing the probability of lithium plating.

The above description of various embodiments tends to focus on the differences between the embodiments. The same or similar content in one embodiment may be learned by referring to another embodiment, and for brevity, is not repeated herein.

It is hereby noted that this application is not limited to the foregoing embodiments. The foregoing embodiments are merely examples. Any and all embodiments with substantively the same constituents or exerting the same effects as the technical ideas hereof without departing from the scope of the technical solutions of this application still fall within the technical scope of this application. In addition, all kinds of variations of the embodiments conceivable by a person skilled in the art and any other embodiments derived by combining some constituents of the embodiments hereof without departing from the subject-matter of this application still fall within the scope of this application.

## Claims

1. A method for preparing lithium iron phosphate, comprising the following steps:
mixing iron phosphate, a lithium source, a carbon source, a dispersant, and a solvent to make a precursor slurry; and
sintering the precursor slurry to make lithium iron phosphate, wherein
the dispersant comprises an ammonium salt compound represented by Formula (1): 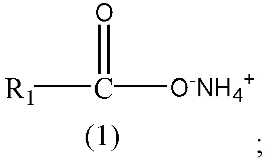
in the formula above, R₁ is a carbon-containing organic group.

2. The method for preparing lithium iron phosphate according to claim 1, wherein the ammonium salt compound comprises at least one of compounds represented by Formula (1A) to Formula (1B): 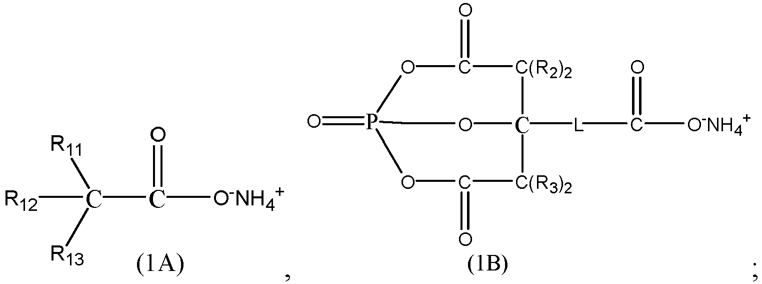
in the formulas above, R₁₁ to R₁₃ each are independently selected from hydrogen, a substituted or unsubstituted C₁ to C₅ alkyl group, a hydroxyl group, or -C(O)O⁻NH₄⁺;
each R₂ and each R₃ are any one independently selected from hydrogen or a substituted or unsubstituted C₁ to C₅ alkyl group; and
L is any one selected from a single bond, a C₁ to C₅ alkylene, or a C₁ to C₅ alkylene in which a hydrogen atom is substituted by -C(O)O⁻NH₄⁺.

3. The method for preparing lithium iron phosphate according to claim 2, wherein, in the compound represented by Formula (1A), R₁₁ to R₁₃ each are independently selected from hydrogen, an unsubstituted C₁ to C₅ alkyl group, a hydroxy-substituted C₁ to C₅ alkyl group, a hydroxyl group, or -C(O)O⁻NH₄⁺.

4. The method for preparing lithium iron phosphate according to claim 2 or 3, wherein, in the compound represented by Formula (1A), at least one of R₁₁ to R₁₃ is - C(O)O⁻NH₄⁺.

5. The method for preparing lithium iron phosphate according to any one of claims 1 to 4, wherein the ammonium salt compound comprises at least one of ammonium citrate, diammonium citrate, or a compound represented by Formula (b-1) or Formula (b-2): 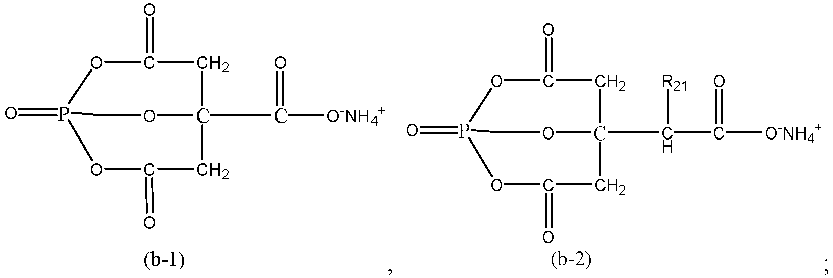 in the formulas above, R₂₁ is selected from a C₁ to C₃ alkyl group or -C(O)O⁻NH₄⁺.

6. The method for preparing lithium iron phosphate according to any one of claims 1 to 5, wherein a mass of the dispersant is 0.3% to 7% of a mass of the iron phosphate.

7. The method for preparing lithium iron phosphate according to claim 6, wherein the mass of the dispersant is 0.5% to 1% of the mass of the iron phosphate.

8. The method for preparing lithium iron phosphate according to any one of claims 1 to 7, wherein the sintering is performed at a temperature of 780 °C to 820 °C.

9. The method for preparing lithium iron phosphate according to claim 8, wherein the sintering is performed at a temperature of 750 °C to 790 °C.

10. The method for preparing lithium iron phosphate according to any one of claims 1 to 9, wherein the carbon source comprises at least one of glucose, sucrose, starch, phenolic resin, cyclodextrin, polyethylene, polyethylene glycol, or polyvinyl alcohol.

11. The method for preparing lithium iron phosphate according to any one of claims 1 to 10, wherein the lithium source comprises at least one of lithium hydroxide monohydrate, lithium carbonate, lithium dihydrogen phosphate, lithium phosphate, or lithium acetate.

12. The method for preparing lithium iron phosphate according to any one of claims 1 to 11, wherein a solid content of the precursor slurry is greater than or equal to 45%.

13. The method for preparing lithium iron phosphate according to any one of claims 1 to 12, wherein the solvent comprises at least one of water or an alcohol organic solvent.

14. A lithium iron phosphate, wherein the lithium iron phosphate is prepared by the method for preparing lithium iron phosphate according to any one of claims 1 to 13.

15. An ammonium salt compound, wherein the ammonium salt compound is represented by Formula (1B): 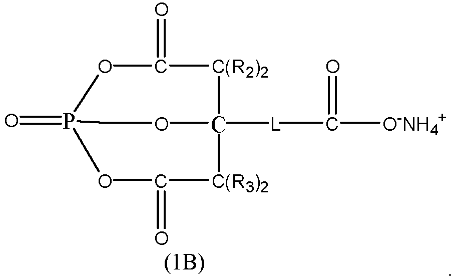
In the formula above, each R₂ and each R₃ are any one independently selected from hydrogen or a substituted or unsubstituted C₁ to C₅ alkyl group.
L is any one selected from a single bond, a C₁ to C₅ alkylene, or a C₁ to C₅ alkylene in which a hydrogen atom is substituted by -C(O)O⁻NH₄⁺.

16. Application of the ammonium salt compound according to claim 15, wherein the ammonium salt compound serves as a dispersant.

17. Application of the ammonium salt compound according to claim 15 in preparation of lithium iron phosphate.

18. A positive electrode plate, wherein the positive electrode plate comprises a current collector and a positive active layer disposed on a surface of the current collector, and constituents of the positive active layer comprise the lithium iron phosphate according to claim 14.

19. A secondary battery, wherein the secondary battery comprises the lithium iron phosphate according to claim 14 or the positive electrode plate according to claim 18.

20. An electrical device, wherein the electrical device comprises the secondary battery according to claim 19.
